# EUROPEAN PATENT APPLICATION

(11) **EP 3 144 095 A1**
(43) Date of publication of application: **22.03.2017**
(21) Application number: 16188954.8
(22) Date of filing: 15.09.2016
(51) Int. Cl.: B23K 20/12

(54) **INERTIA WELDING METHOD**

(30) Priority: 18.09.2015 US 201514858267
(71) Applicant: General Electric Company, Schenectady, NY 12345 (US)
(72) Inventor: WESSMAN, Andrew Ezekiel, West Chester, OH 45069 (US); TRAPP, Timothy Joseph, Cincinnati, OH 45215 (US); ENGLISH, Christopher Lee, Evendale, OH 45215 (US); WEI, Daniel Yeuching, Lynn, MA 01910-0002 (US)
(74) Representative: Pöpper, Evamaria

(57) **Abstract**

An inertia welding method includes: mounting two workpieces (12, 14) in an inertia welding apparatus (10); rotating a least one of the workpieces (12, 14), so as to produce relative rotation of the two workpieces (12, 14) at a predetermined RPM; forcing together the two workpieces (12, 14) with predetermined first weld load so as to cause frictional heating at an interface therebetween; maintaining the first weld load for a first interval; forcing together the two workpieces (12, 14) with a predetermined second weld load greater than the first weld load so as to cause material upset and bonding between the two workpieces (12, 14), while the rotation brakes to a stop, terminating the weld process; wherein the first and second weld loads are selected so as a produce a specific temperature-distance profile in a selected one of the workpieces (12, 14), at the termination of the weld process.

## Description

### BACKGROUND OF THE INVENTION

The technology described herein relates generally to friction welding, and more particularly to inertia friction welding.

Inertia friction welding is a process in which two workpieces are forced together while at least one workpiece is rotating. The resulting frictional heating causes the workpieces to soften, deform ("upset"), and bond together. This process is particularly useful for making fast, high-quality bonds, especially for large annular workpieces.

Increasing temperature capability and resistance to high temperature deformation demanded by advanced aviation materials challenges existing inertia weld processes. The need to inertia weld high-temperature aerospace alloys to lower temperature, often less expensive, materials increases the challenge since this drives undesirable unequal upsets between the two dissimilar materials.

Accordingly, there is a need for an inertia welding method capable of producing balanced upsets with dissimilar materials.

### BRIEF DESCRIPTION OF THE INVENTION

This need is addressed by an inertia friction welding method having two or more distinct stages. The first stage includes frictional preheating which can reduce the difference in flow behavior between two workpieces.

### BRIEF DESCRIPTION OF THE DRAWINGS

The invention may be best understood by reference to the following description taken in conjunction with the accompanying drawing figures in which:
FIG. 1 is a schematic side view of a friction welding machine with first and second workpieces mounted therein;
FIG. 2 is a schematic cross-sectional view of an inertia welded joint between two workpieces;
FIG. 3 is a graph illustrating the process of a two-stage inertia weld; and
FIG. 4 is a graph showing comparative temperature profiles of one-stage and two-stage inertial welding processes.

### DETAILED DESCRIPTION OF THE INVENTION

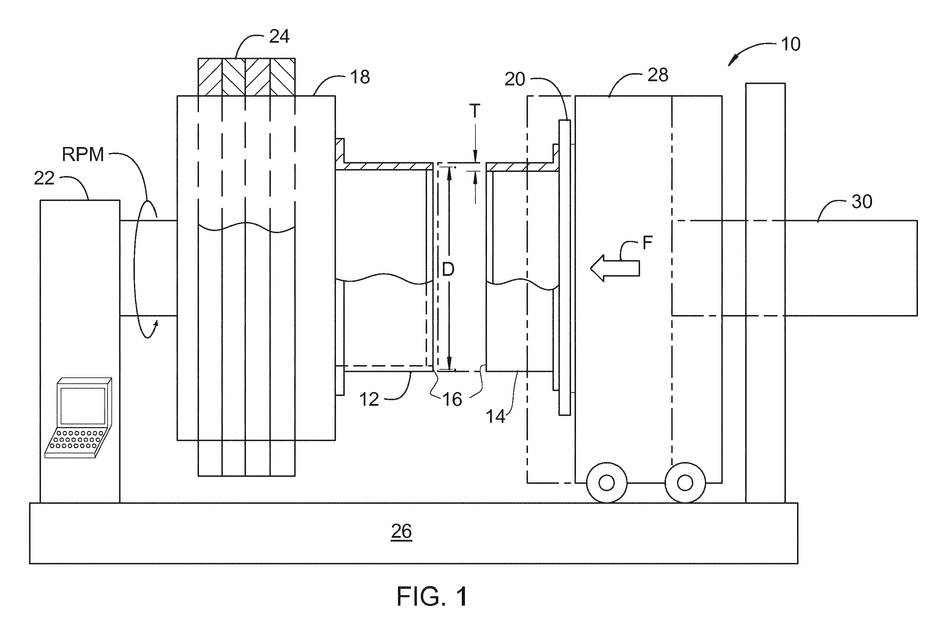

Referring to the drawings wherein identical reference numerals denote the same elements throughout the various views, FIG. 1 illustrates an exemplary inertia welding machine 10 for inertia welding together first and second workpieces or parts 12, 14 which may have any suitable configuration. In the exemplary embodiment illustrated, the workpieces 12, 14 are annular members which are inertia welded together for use as combustor, turbine, or compressor structural casings or pressure vessels in an aircraft gas turbine engine.

The two workpieces 12, 14 may formed of a high strength, heat resistant aerospace alloy, such as a nickel- or cobalt-based "superalloy", for use in various hot section components of an aircraft gas turbine engine. A typical turbine superalloy is nickel-based and has an exemplary forging temperature range of about 200° F. below the melting temperature thereof. It is often desirable for the two workpieces 12, 14, to be made from different alloys having different thermal properties including different forging and melting temperatures.

The workpieces 12, 14 are coaxially aligned with each other and have opposing "weld preps" or contact areas 16 at which inertia welding is effected. The weld preps 16 have an average diameter D and a weld prep thickness T.

The machine 10 includes a first rotary head 18 to which is suitably fixedly attached the first workpiece 12, and a second head 20 to which the second workpiece 14 is suitably fixedly attached. The first head 18 is operatively joined to a suitable motor 22, such as a hydraulic motor, for being rotated during operation at a suitable rotary speed expressed in revolutions per minute (RPM). Suitably attached to the first head 18 are one or more annular flywheels 24 which are installed selectively used as a means of controlling the rotary mass moment of inertia of the first head 18, thereby adjusting inertia welding energy. The motor 22 and first head 18 are suitably attached to a supporting frame 26 at one end thereof, and the second head 20 is carried by a suitable truck or carriage 28 on the opposite end of the frame 26. The second head 20 is not rotatable on the truck 28, and the truck 28 is operatively joined to a hydraulic piston 30 which is configured for translating the truck 28 horizontally atop the frame 26 for engaging the first and second workpieces at the weld preps 16 under a specific weld load or weld force F, expressed in kN or lbf for example.

The inertia welding machine 10 illustrated in FIG. 1 is conventional in configuration and basic operation. This type of machine is commercially available from the Manufacturing Technology Inc. (MTI) company, of South Bend, Indiana. Variations are possible of the machine without affecting the basic process. For example, the second head 20 could be rotatable as well. Friction welding machines are also available (not shown) which are capable of direct drive of one or both heads, in combination with or in lieu of the inertial drive described above.

In inertia welding, the first head 18 and attached first workpiece 12 are accelerated to a predetermined rotary speed, and then the piston 30 is actuated to drive the truck 28 and attached second workpiece 14 in frictional engagement with the first part at the weld prep 16 under the predetermined weld load F. Upon application of the weld load, the motor 22 is disconnected from the first head 18, which in the case of a hydraulic motor is accomplished by 20 simply interrupting the hydraulic pressure, and the inertia of the flywheels 24 imparts energy at the engaging weld preps 16 which undergo frictional heating as the second workpiece 14 frictionally brakes the rotating first workpiece 12.

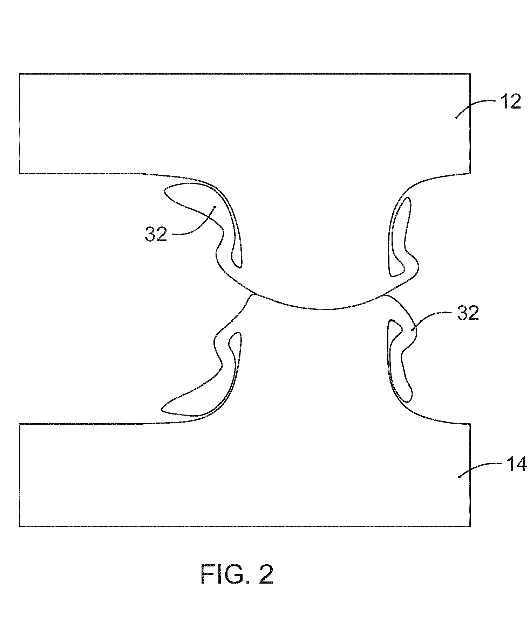

The friction generated at the weld preps 16 locally increases the temperature of the two workpieces to a temperature below the melting temperature of the workpieces, yet sufficiently high for effecting a forged, friction weld therebetween. As the two workpieces 12, 14 are brought together each undergoes "upset" at the respective weld preps 16 as seen in FIG. 2, that is, softening and displacement of material, resulting in both axial shortening and extrusion of "flash" 32 which is generally removed in a post-weld machining operation. It is considered desirable for the upsets to be substantially equal; however this often may not be achieved in a conventional single-stage inertia weld when the two workpieces 12, 14 have differing properties.

There are four control parameters relevant to an inertia weld. Fundamentally, the geometry, including size and configuration, of the workpieces 12, 14 is one parameter since the inertia weld is effected at the corresponding annular weld preps 16. As indicated above, part size is a factor both for being physically supported in a given type of inertia welding machine, and for the amount of energy required to effect the inertia welding thereof which is dependent on available flywheel inertia.

A second control parameter is the weld load F which is exerted over the weld preps 16 to effect a corresponding weld stress or load per unit area in compression, typically represented in kg/cm² or pounds per square inch (psi).

A third control parameter is the unit energy input effected at the weld preps for inertia welding thereat which is typically represented by J/cm² or lbf/in². The unit energy is affected by the mass moment of inertia of the rotating first head 18 and the attached flywheels 24 which may be adjusted in a finite number of increments by the additional or subtraction of individual flywheels 24.

The fourth control parameter is the initial contact speed of the rotating first workpiece 12 at its weld prep 16 typically expressed in surface m/s or surface feet per minute (SFM) which is the product of the circumferential length at the weld prep 16 and the rotary speed expressed in RPM. In the case of a machine employing direct drive, the RPM may be increased or decreased during the weld process.

As noted above, completing a weld in a single stage can lead to inconsistent results. In particular, cooling of one or both of the workpieces 12, 14 can cause the weld upset process to momentarily and unpredictably slow down or stop before the weld is complete. To avoid this effect, an inertia weld may be effected using a process with one or more additional stages.

In one example of a multi-stage process, in a first stage, the first head 18 and attached first workpiece 12 are accelerated to a predetermined rotary speed, and then the piston 30 is actuated to drive the truck 28 and attached second workpiece 14 in frictional engagement with the first part at the weld prep 16 under a predetermined first weld load "F1" which is maintained for a first time interval. Upon application of the first weld load, the motor 22 is disconnected from the first head 18, which in the case of a hydraulic motor is accomplished by 20 simply interrupting the hydraulic pressure, and the inertia of the flywheels 24 imparts energy at the engaging weld preps 16 which undergo frictional heating as the second workpiece 14 frictionally brakes the rotating first workpiece 12. After the first interval has expired, a second stage is effected when the piston 30 is actuated to drive the truck 28 and attached second workpiece 14 under a predetermined second weld load "F2" which is greater than the first weld load. The second weld load F2 is maintained until the first workpiece 12 is frictionally braked to a stop and the weld process is complete.

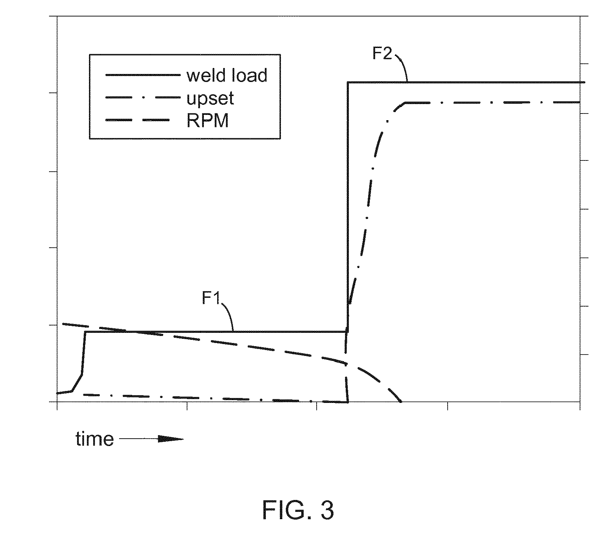

FIG. 3 illustrates graphically the weld load, the RPM, and the upset vs. time. In the first stage, with the first weld load F1 applied, frictional heating occurs as shown by the RPM decay, but no upset occurs. In the section stage, with the second weld load F2 applied, the increased pressure raises the temperature sufficiently for upset to occur.

The first and second welding forces F1, F2 and the first interval may be determined by simulation of the weld process, for example using suitable heat transfer analysis software on a programmable computer.

More specifically, the weld process may be simulated using as inputs to the simulation software factors such as: the heat transfer properties of the two workpieces, the external environmental conditions, and postulated values of the weld process control parameters described above. The output of the simulation may be a profile of temperature vs. distance present at the time the weld is completed. This is referred to herein as a "temperature-distance profile". It is noted that the selected temperature-distance profile need not occur exactly simultaneously with the termination of the weld process, i.e. exactly as the components brake to a stop. For the purposes of this description, if the selected temperature-distance profile occurs, for example, several seconds before or after the termination of the weld process, this may be considered to be the profile "at the termination of the weld process".

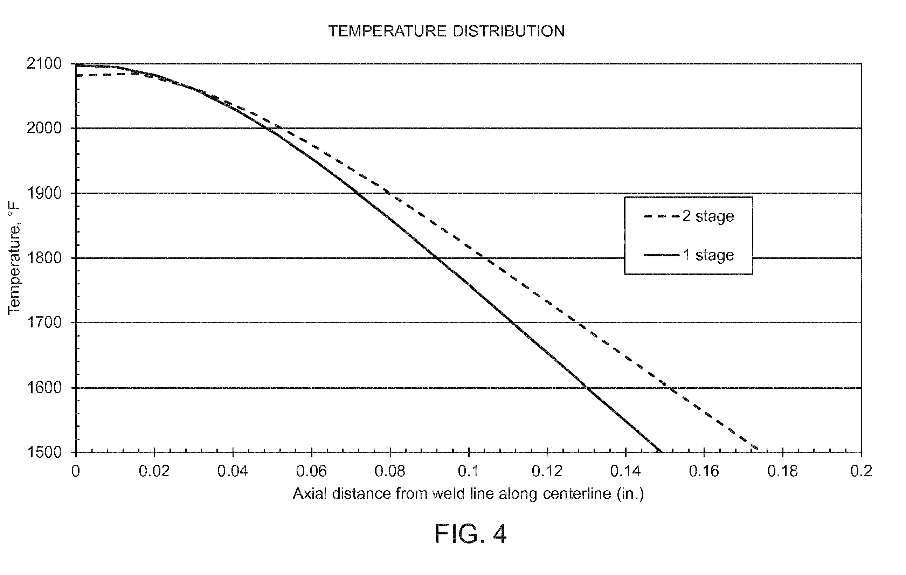

FIG. 4 is a graph showing material temperature vs. distance from the weld interface, comparing identical joints using a one-stage process vs. a two-stage process. The two-stage process clearly exhibits a temperature-distance profile which has roughly the same peak temperature "Tpeak" as the one-stage process, but the curve is generally shifted to the right, with the material temperature being higher for the two-stage than the one-stage at each location within the workpiece. In general, elevated temperatures are maintained at greater depths into the workpiece.

Within the simulation, the control parameters may be varied as needed to obtain a desired temperature-distance profile such as that shown in FIG. 4. The target profile may include a specific peak temperature Tpeak and a specific slope of the temperature vs. distance curve. This may be done using analytical methods or by trial and error. Once the desired temperature-distance profile is achieved in simulation, the actual welding process may then be carried out using the control parameters (including specifically the first and second welding loads and the first interval) which were found to have resulted in the desired temperature-distance profile.

The example above describes a two-stage process in which the RPM is allowed to decay naturally and the first and second weld loads are constant. However, the process may be modified as needed to suit a particular application. For example, the RPM may be maintained constant, increased, or decreased as desired using the direct drive described above. Furthermore, during each stage, the weld loads may be varied.

The temperature-distance profile may include multiple segments, defining multiple stages of the weld process. Where multiple segments or stages are used, the segments or stages after the first segment or stage may be referred to as "subsequent segments" or "subsequent stages". Each segment of the profile may have its own slope, which may be zero, positive, or negative. Each segment may have its own associated weld load. Each weld load may be constant, or may be increased or decreased during that segment. Each segment may have its own RPM, which may be naturally decaying, constant, or intentionally varied. Each segment may have its own time interval. The change in weld load or speed between segments may be a step change (instantaneous) or at a defined rate of increase or decrease. This ability to define the temperature-distance profile will provide flexibility to accommodate various materials. The simulation software describe above may be used to determine all of the weld control parameters for the entire profile.

Frequently the two workpieces 12, 14, would not be identical in all aspects (alloy, dimensions, etc.). For this reason and because the same set of weld control parameters apply to both workpieces 12, 14, it is only possible to produce a desired end-of-weld temperature-distance profile in one of the two workpieces 12, 14. Therefore the profile may be controlled for the workpiece 12, 14 that is considered to have the most significant effect on the final joint quality. For example, the workpiece 12, 14 which is more resistant to upset may be considered more significant. This may be attributable to the alloy, workpiece size, and/or heat transfer properties. This may be referred to as the "stronger" of the two workpieces 12, 14.

The inertia welding method described above has several advantages compared to the prior art. By preheating the weld couple the difference in flow behavior can be reduced as the difference in flow behavior is reduced at higher temperatures. It provides a means to achieve more balanced upsets in dissimilar materials, and can allow joining of materials where the disparity in flow behavior is too great for conventional inertia weldability and the ability to achieve predetermined residual stress or microstructural characteristics or mechanical behavior.

The foregoing has described an inertia welding method. All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends any novel one, or any novel combination, of the features disclosed in this specification (including any accompanying claims, abstract and drawings), or to any novel one, or any novel combination, of the steps of any method or process so disclosed.

Various aspects and embodiments of the present invention are defined by the following clauses:
1. An inertia welding method, comprising:
   mounting two workpieces in an inertia welding apparatus;
   rotating at least one of the workpieces, so as to produce relative rotation of the two workpieces;
   in a first stage, forcing together the two workpieces with a first weld load so as to cause frictional heating at an interface therebetween;
   maintaining the first weld load for a first interval;
   in a subsequent stage, forcing together the two workpieces with a one or more subsequent weld loads, at least one of the subsequent weld loads being greater than the first weld load so as to cause material upset and bonding between the two workpieces;
   wherein the weld loads are selected so as a produce a specific temperature-distance profile in a selected one of the workpieces, at a termination of the weld process.
2. The method of clause1 wherein one workpiece is stronger than the other workpiece.
3. The method of clause 2 wherein the weld loads are selected so as to produce the specific temperature-distance profile in the stronger workpiece.
4. The method of clause 1 wherein the workpieces are made from different alloys.
5. The method of clause 1 wherein the relative rotation occurs at a different RPM during the different stages.
6. The method of clause 1 wherein the temperature-distance profile includes a specific peak temperature.
7. The method of clause 1 wherein the temperature-distance profile includes a specific slope.
8. The method of clause 1 further comprising, prior to starting the relative
   rotation, the following steps:
   using a computer, simulating an inertia weld process that includes:
      mounting two workpieces in spaced-apart jaws of an inertia welding apparatus;
      rotating at least one of the workpieces;
      in a first stage, forcing together the two workpieces with a first weld load so as to cause frictional heating at an interface therebetween;
      maintaining the first weld load for a first interval;
      in a subsequent stage, forcing together the two workpieces with at least one subsequent weld load, wherein at least one of the subsequent weld loads is greater than the first weld load, so as to cause material upset and bonding between the two workpieces;
      determining a temperature-distance profile present in the workpieces at the termination of the weld process; and
      Selecting values for the weld loads so as to result in a specific temperature-distance profile present in the workpieces at a termination of the weld process.
9. A method of determining inertia weld control parameters, comprising:
   using a computer, simulating an inertia weld process that includes:
      mounting two workpieces in spaced-apart jaws of an inertia welding apparatus;
      rotating at least one of the workpieces;
      in a first stage, forcing together the two workpieces with a first weld load so as to cause frictional heating at an interface therebetween;
      maintaining the first weld load for a first interval;
      in a subsequent stage, forcing together the two workpieces with at least one subsequent weld load, wherein at least one of the subsequent weld loads is greater than the first weld load, so as to cause material upset and bonding between the two workpieces;
      determining a temperature-distance profile present in the workpieces at the termination of the weld process; and
      Selecting values for the weld loads so as a result in a specific temperature-distance profile present in the workpieces at the termination of the weld process.
10. The method of clause 9 wherein one workpiece is stronger than the other workpiece.
11. The method of clause 10 wherein the weld loads are selected so as to produce the specific temperature-distance profile in the stronger workpiece.
12. The method of clause 9 wherein the workpieces are made from different alloys.
13. The method of clause 9 wherein the relative rotation occurs at a different RPM for each stage.
14. The method of clause 9 wherein the temperature-distance profile includes a specific peak temperature.
15. The method of clause 9 wherein the temperature-distance profile includes a specific slope.
16. The method of clause 1 wherein:
   the relative rotation occurs at a different RPM for each stage, the method further comprising selecting values for RPM and the weld loads for each stage so as to result in the specific temperature-distance profile.
17. The method of clause 1 wherein the RPM varies during each stage.
18. The method of clause 1 wherein the weld load varies during each stage.

## Claims

1. An inertia welding method, comprising:
mounting two workpieces (12, 14) in an inertia welding apparatus (10);
rotating at least one of the workpieces (12, 14), so as to produce relative rotation of the two workpieces (12, 14);
in a first stage, forcing together the two workpieces (12, 14) with a first weld load so as to cause frictional heating at an interface therebetween;
maintaining the first weld load for a first interval;
in a subsequent stage, forcing together the two workpieces (12, 14) with a one or more subsequent weld loads, at least one of the subsequent weld loads being greater than the first weld load so as to cause material upset and bonding between the two workpieces (12, 14);
wherein the weld loads are selected so as a produce a specific temperature-distance profile in a selected one of the workpieces (12, 14), at a termination of the weld process.

2. The method of claim 1 wherein one workpiece (12, 14) is stronger than the other workpiece (12, 14).

3. The method of claim 2 wherein the weld loads are selected so as to produce the specific temperature-distance profile in the stronger workpiece (12, 14).

4. The method of claim 1 wherein the workpieces (12, 14) are made from different alloys.

5. The method of claim 1 wherein the relative rotation occurs at a different RPM during the different stages.

6. The method of claim 1 wherein the temperature-distance profile includes a specific peak temperature.

7. The method of claim 1 wherein the temperature-distance profile includes a specific slope.

8. The method of claim 1 further comprising, prior to starting the relative rotation, the following steps:
using a computer, simulating an inertia weld process that includes:
mounting two workpieces (12, 14) in spaced-apart jaws of an inertia welding apparatus (10);
rotating at least one of the workpieces (12, 14);
in a first stage, forcing together the two workpieces (12, 14) with a first weld load so as to cause frictional heating at an interface therebetween;
maintaining the first weld load for a first interval;
in a subsequent stage, forcing together the two workpieces (12, 14) with at least one subsequent weld load, wherein at least one of the subsequent weld loads is greater than the first weld load, so as to cause material upset and bonding between the two workpieces (12, 14);
determining a temperature-distance profile present in the workpieces (12, 14) at the termination of the weld process; and
Selecting values for the weld loads so as to result in a specific temperature-distance profile present in the workpieces (12, 14) at a termination of the weld process.

9. A method of determining inertia weld control parameters, comprising:
using a computer, simulating an inertia weld process that includes:
mounting two workpieces (12, 14) in spaced-apart jaws of an inertia welding apparatus (10);
rotating at least one of the workpieces (12, 14);
in a first stage, forcing together the two workpieces (12, 14) with a first weld load so as to cause frictional heating at an interface therebetween;
maintaining the first weld load for a first interval;
in a subsequent stage, forcing together the two workpieces (12, 14) with at least one subsequent weld load, wherein at least one of the subsequent weld loads is greater than the first weld load, so as to cause material upset and bonding between the two workpieces (12, 14);
determining a temperature-distance profile present in the workpieces (12, 14) at the termination of the weld process; and
Selecting values for the weld loads so as a result in a specific temperature-distance profile present in the workpieces (12, 14) at the termination of the weld process.

10. The method of claim 9 wherein one workpiece (12, 14) is stronger than the other workpiece.

11. The method of claim 10 wherein the weld loads are selected so as to produce the specific temperature-distance profile in the stronger workpiece (12, 14).

12. The method of claim 9 wherein the workpieces (12, 14) are made from different alloys.

13. The method of claim 9 wherein the relative rotation occurs at a different RPM for each stage.

14. The method of claim 9 wherein the temperature-distance profile includes a specific peak temperature.

15. The method of claim 9 wherein the temperature-distance profile includes a specific slope.
